# FASCICULE DE BREVET EUROPEEN

(11) **EP 2 046 638 B1**
(45) Date de publication et mention de la délivrance du brevet: **15.09.2010**
(21) Numéro de dépôt: 07823666.8
(22) Date de dépôt: 30.07.2007
(51) Int. Cl.: B64C 1/40, B64D 15/04, B64D 29/00, C04B 12/00

(54) **ELEMENT DE STRUCTURE D'UN AERONEF**
STRUKTURELEMENT FÜR EIN FLUGZEUG
STRUCTURAL ELEMENT OF AN AIRCRAFT

(30) Priorité: 04.08.2006 FR 0653291
(43) Date de publication de la demande: 15.04.2009
(73) Titulaire: AIRBUS France, 31060 Toulouse (FR)
(72) Inventeur: PORTE, Alain, F-31770 Colomiers (FR); MEDDA, Bruno, F-31170 Tournefeuille (FR)
(74) Mandataire: Fantin, Laurent
(86) Numéro de dépôt international: PCT/FR2007/051751
(87) Numéro de publication internationale: WO 2008/015362

(56) Documents cités:
- EP-A- 0 178 144
- WO-A-03/087008
- FR-A1- 2 859 992
- US-A- 5 925 449

## Description

La présente invention se rapporte à un élément de structure d'un aéronef susceptible d'être soumis à des températures élevées tel que notamment un cadre arrière d'une nacelle d'aéronef.

Un aéronef comprend des éléments de structure assurant notamment la reprise ou la transmission d'efforts entre différents points de ladite structure. Ces éléments permettent notamment de supporter l'enveloppe externe de l'aéronef susceptible d'être en contact avec l'air et lui confèrent une certaine rigidité.

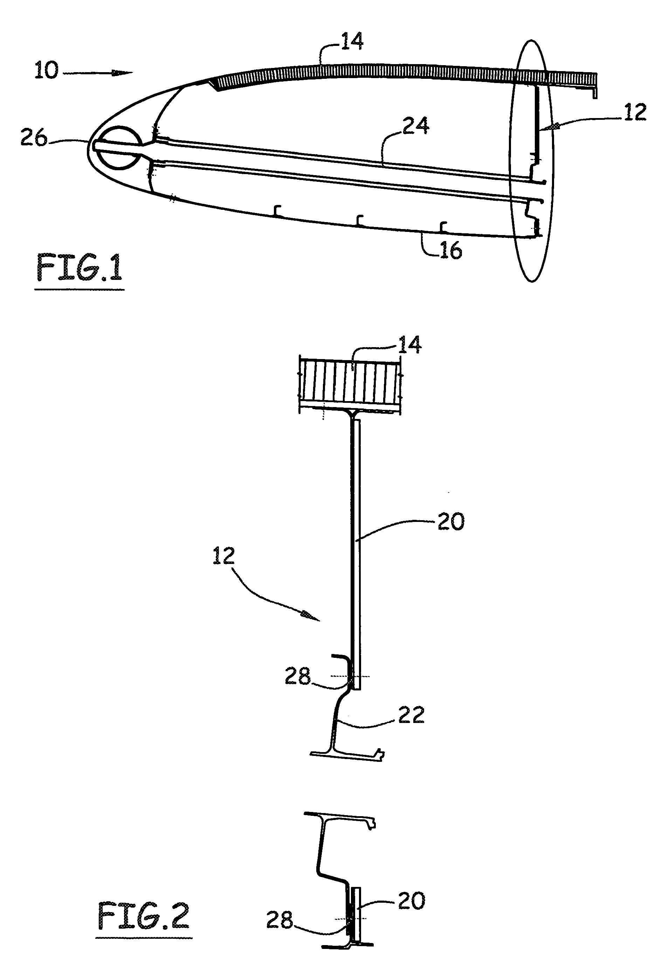

On a représenté sur la figure 1 un élément de structure prévu au niveau d'une entrée d'air 10 d'aéronef disposée à l'avant d'une nacelle dans laquelle est intégrée une motorisation, ledit élément de structure étant appelé cadre arrière 12 et reliant la peau 14 disposée à l'intérieur de la nacelle et la peau 16 disposée à l'extérieur de la nacelle. Ce cadre arrière 10 assure la reprise des efforts de flexion, de rotation ou autre qui s'appliquent sur l'entrée d'air tels que par exemple, le poids de l'entrée d'air, les efforts induits par les écoulements aérodynamiques.

Compte tenu de l'importance de la part du carburant dans les coûts d'exploitation d'un aéronef, les constructeurs tendent à diminuer la masse des aéronefs afin de réduire leur consommation, notamment en utilisant des matériaux composites pour réaliser des éléments de la structure d'un aéronef.

Ces matériaux composites sont composés de fibres, notamment en carbone, graphite, basalte, aramide ou verre par exemple, noyées dans une matrice en résine organique telle que par exemple une résine époxy, thermoplastique ou thermodurcissable. Les fibres peuvent se présenter sous la forme de tissus ou de nappes non tissées, selon les cas.

Pour pouvoir être utilisées ultérieurement, ces fibres sont généralement enrobées. En effet, lors de leur élaboration, l'état de surface de ces fibres est dégradé ce qui nuit à l'adhésion des résines organiques. En outre, la manipulation des fibres à l'état brut, lors d'une opération de tissage par exemple, est délicate car des fibrilles se détachent du faisceau principal. Aussi, les fibres sèches sont traitées pour restaurer l'état de surface puis enrobées d'une résine organique favorisant l'adhésion chimique pour une imprégnation ultérieure. Cet enrobage est appelé ensimage. Les fibres commercialisées ensimées, sont lisses et prêtes à l'emploi.

Des techniques industrielles ont été développées pour la mise en oeuvre des fibres ensimées et des résines époxy. Ces techniques sont maîtrisées et permettent d'obtenir des coûts de fabrication des pièces compatibles avec ceux des pièces métalliques équivalentes.

Par ailleurs, les pièces en matériau composite offrent des caractéristiques mécaniques au moins égales à celles des pièces métalliques et sont nettement plus légères que ces dernières.

Cependant, l'utilisation des matériaux composites pour réaliser des parties de la structure peut s'avérer problématique dans certains cas, notamment lorsque lesdites parties sont placées dans des zones susceptibles d'être soumises à des températures élevées, par exemple supérieure à 500°C. C'est notamment le cas du cadre arrière de l'entrée d'air. Or, à de telles températures, les pièces réalisées en matériau composite à base de résine organique perdent leurs caractéristiques mécaniques et structurelles, ce qui n'est pas acceptable pour de tels éléments.

Une première solution consiste à ne pas utiliser de matériaux composites pour réaliser ces éléments mais du titane. Même si les pièces conservent leurs caractéristiques mécaniques et structurelles à températures élevées, cette solution ne permet pas de réduire la masse de l'aéronef et conduit à des coûts de réalisation et d'exploitation plus élevés.

Une autre solution consiste à utiliser des matériaux composites de l'art antérieur et à recouvrir les surfaces susceptibles d'être soumises à des températures élevées d'un isolant thermique, également appelé écran pare-feu. Selon l'exemple illustré sur la figure 2, le cadre arrière 12 est réalisé en matériau composite et recouvert d'écrans pare-feux 20 pour protéger les faces en matériau composite susceptibles d'être soumises à des températures élevées. Selon une première variante, l'écran pare-feu peut être composé d'une laine de verre ou de roche intercalée entre deux clinquants métalliques de maintien. Selon une autre variante, l'écran pare-feu peut être constitué d'une couche de silicone.

Dans le cas du cadre arrière, ce dernier comprend également une bride 22 pour un tube 24 prévu pour le système de dégivrage de la lèvre 26 de l'entrée d'air qui utilise de l'air prélevé sur le moteur à une température élevé. Pour protéger le cadre arrière en matériau composite, il est nécessaire de prévoir un isolant 28 entre la bride et ledit cadre.

Par conséquent, l'utilisation d'un matériau composite selon l'art antérieur n'est pas satisfaisante car elle complexifie la réalisation de l'élément de structure du fait de l'ajout d'éléments isolants tels que des pare-feux et le gain de masse découlant de l'emploi de matériau composite est quasiment annulé par la présence des pare-feux.

Les documents US-5.925.449, WO03/087008 et FR-2.859.992 décrivent des matériaux composites aptes à résister à des températures élevées. Cependant, ils n'ont pas des caractéristiques mécaniques satisfaisantes pour un cadre arrière d'une entrée d'air.

Aussi, la présente invention vise à pallier aux inconvénients de l'art antérieur en proposant une entrée d'air avec un cadre arrière susceptible de conserver ses caractéristiques mécaniques et structurelles à températures élevées.

A cet effet, l'invention a pour objet une entrée d'air d'une nacelle d'aéronef comportant une peau extérieure, une peau intérieure et un cadre arrière, caractérisée en ce que le cadre arrière comprend deux parties concentriques, une première partie annulaire en matériau composite à base d'une résine géopolymérique renforcée par des fibres en contact avec la peau extérieure et une seconde partie annulaire métallique en contact avec la peau intérieure. D'autres caractéristiques et avantages ressortiront de la description qui va suivre de l'invention, description donnée à titre d'exemple uniquement, en regard des dessins annexés sur lesquels :
- la figure 1 est une coupe longitudinale d'une entrée d'air d'une nacelle d'aéronef comportant un élément de structure appelé cadre arrière selon l'art antérieur,
- la figure 2 est une coupe illustrant un cadre arrière selon l'art antérieur,
- la figure 3 est une coupe longitudinale d'une entrée d'air d'une nacelle d'aéronef comportant un élément de structure appelé cadre arrière selon l'invention,
- la figure 4 est une coupe illustrant en détails un cadre arrière selon une première variante de l'invention, et
- la figure 5 est une coupe illustrant en détails un cadre arrière selon une autre variante de l'invention.

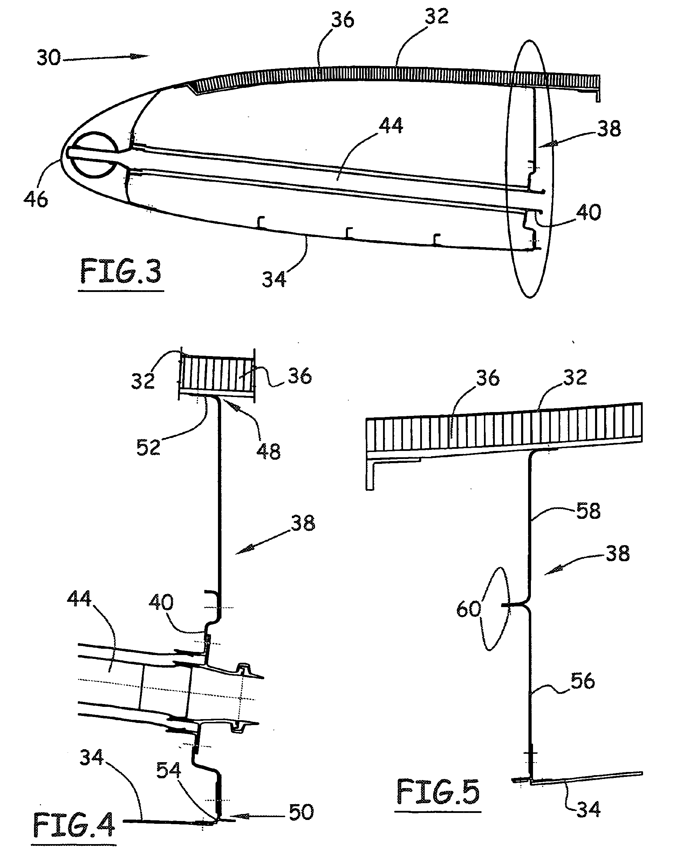

Sur la figure 3, on a représenté en 30 une entrée d'air d'une nacelle d'un aéronef. Cette entrée d'air comprend une peau 32 dite intérieurs susceptible d'être en contact avec les flux aérodynamiques s'écoulant à l'intérieur de la nacelle et une peau 34 dite extérieure susceptible d'être en contact avec les flux aérodynamiques s'écoulant à l'extérieur de la nacelle.

La peau intérieure 32 peut comprendre un panneau ou revêtement acoustique 36. Les peaux intérieure et extérieure ne sont pas plus détaillées car elles sont connues de l'homme du métier.

L'entrée d'air 30 comprend un élément de structure, appelé cadre arrière 38 reliant la peau intérieure 32 et la peau extérieure 34 et assurant la reprise des efforts de flexion, de rotation ou autre qui s'appliquent sur l'entrée d'air tels que par exemple, le poids de l'entrée d'air, les efforts induits par l'écoulement aérodynamique.

Ce cadre arrière 38 peut comprendre une ouverture au niveau de laquelle est prévue une bride 40 supportant un tube 44 prévu pour un système de dégivrage de la lèvre 46 de l'entrée d'air 30 qui utilise de l'air prélevé sur le moteur à une température élevée.

Selon l'invention, le cadre arrière 38 est réalisé au moins en partie en matériau composite comportant une résine géopolymérique renforcée par des fibres.

Pour obtenir un matériau susceptible de conserver sa résistance mécanique à haute température, on utilise une résine géopolymérique de type sialate (xSiO₂,AlO₂), dans lequel x est compris entre ou égale à 1,75 et 50. Avantageusement, on utilise la résine commercialisée sous la dénomination MEYEB par la société Cordi-géopolymère.

Par résine géopolymérique, on entend une résine géopolymérique ou un mélange de résines géopolymériques.

Selon les applications, les fibres peuvent avoir différentes sections et être réalisées à partir de différents matériaux, tels que par exemple en carbone, graphite, basalte, aramide ou verre.

Les fibres peuvent être sous la forme d'un tissé, d'un non tissé ou d'une nappe. Pour pouvoir être utilisées ultérieurement, ces fibres sont généralement enrobées. En effet, lors de leur élaboration, l'état de surface de ces fibres est dégradé ce qui nuit à l'adhésion des résines organiques. En outre, la manipulation des fibres à l'état brut, lors d'une opération de tissage par exemple, est délicate car des fibrilles se détachent du faisceau principal. Aussi, les fibres sèches sont traitées pour restaurer l'état de surface puis enrobées d'une résine organique favorisant l'adhésion chimique pour une imprégnation ultérieure. Cet enrobage est appelé ensimage. Les fibres commercialisées ensimées, sont lisses et prêtes à l'emploi. La quantité d'ensimage est relativement faible par rapport à la fibre et ne représente que de l'ordre de 1% en masse de la fibre ensimée. Par ailleurs, la nature de la résine organique utilisée pour l'ensimage peut varier d'un fabricant à l'autre.

Pour favoriser l'adhérence de la matrice en résine géopolymérique avec les fibres, il est nécessaire de retirer au moins partiellement l'ensimage, les résines organiques et les résines géopolymériques n'étant pas miscibles.

Le retrait de l'ensimage par un traitement thermique ou chimique permet l'utilisation de tissus largement commercialisés.

Selon un mode de réalisation, le retrait de l'ensimage est réalisé grâce à un traitement thermique consistant à chauffer les fibres jusqu'à la température de dégradation thermique de la résine afin que cette dernière n'adhère plus aux fibres. Avantageusement, le traitement thermique s'effectue sous atmosphère inerte.

Ce traitement permet de traiter la majorité des fibres commercialisées, moyennant un éventuel ajustement de la température et/ou du cycle de température à laquelle sont soumises les fibres ensimées. Il permet un traitement relativement rapide de l'ordre de quelques minutes.

Les températures de dégradation thermique des résines utilisées pour l'ensimage étant très proches de la température d'oxydation des fibres de carbone, il convient de déterminer la température et/ou le cycle de température à laquelle les fibres sont soumises. En effet, une dégradation trop importante des fibres conduirait à réduire fortement les caractéristiques du produit obtenu.

Généralement, la fin de la période de retrait de l'ensimage correspond au début de la période de dégradation des fibres.

Un bon compromis pour obtenir une adhérence satisfaisante et une dégradation limitée des fibres consiste à retirer entre 50% et 90% de l'ensimage.

Pour déterminer la température de chauffe, on réalise un essai sur un échantillon. Grâce à une analyse par thermogravimétrie (ATG) associée ou non à une spectrographie de masse, il est possible d'identifier le composé utilisé pour l'ensimage et de déterminer les températures de début et de fin de retrait ainsi que la masse soustraite.

Le traitement thermique consiste alors à chauffer le produit sous atmosphère inerte en prenant soin de maintenir la température moyenne du four dans la fourchette déterminée lors de l'analyse par thermogravimétrie. Un contrôle final de perte de masse permet de valider le processus. Selon un autre mode opératoire, le retrait de l'ensimage peut être réalisé grâce à un traitement chimique, notamment en utilisant un solvant.

Au préalable, il est nécessaire d'identifier le composé utilisé pour l'ensimage afin de choisir le solvant. Cette identification peut être menée par une analyse par thermogravimétrie. La méthode chimique est relativement simple à mettre en oeuvre et nécessite au moins un bain de solvant comme le chlorure de méthylène par exemple. La durée du traitement est déterminée en fonction notamment du composé utilisé pour l'ensimage.

Pour réduire la durée du traitement, un bon compromis pour obtenir une adhérence satisfaisante et une durée de traitement limitée consiste à retirer entre 50% et 90% de l'ensimage.

Selon une autre caractéristique de l'invention, pour améliorer l'imprégnation des fibres, on réalise un apport d'eau dans la résine, de l'ordre de 3 à 7% en volume pour améliorer la fluidité de ladite résine et obtenir une homogénéisation de la migration de ladite résine dans les fibres. Cet ajout d'eau vient en supplément par rapport à la quantité d'eau préconisé par le fabricant de résine.

Le cadre arrière 38 réalisé au moins en partie avec un matériau composite à base d'une résine géopolymérique résiste aux températures élevées et conserve ses caractéristiques structurelles et mécaniques. Cette solution permet un réel gain de masse car elle ne nécessite aucun pare-feu pour protéger de la chaleur les faces du cadre arrière 38, ni isolant intercalé entre la bride 40 et ledit cadre. Le cadre arrière 38 a une forme annulaire s'étendant depuis la peau intérieure 32 jusqu'à la peau extérieure 34 avec des moyens de liaison 48 à la peau intérieure et des moyens de liaison 50 à la peau extérieure. Pour permettre le passage du système de dégivrage de la lèvre 46, un orifice est ménagé dans cette forme annulaire pour recevoir une bride 40.

Selon un mode de réalisation, les moyens de liaison 48 se présentent sous la forme d'au moins un bord recourbé 52 du cadre arrière 38, plaqué contre la peau intérieure et assujetti à cette dernière par tous moyens appropriés.

Selon un mode de réalisation, les moyens de liaison 50 ont une forme en T 54 dont la tête est assujettie par tous moyens appropriés à la peau extérieure et dont le pied est assujetti par tous moyens appropriés au cadre.

Les moyens de liaison 48 et 50 ne sont pas limités à ces modes de réalisation. D'autres solutions sont envisageables.

Le cadre arrière 38 est réalisé en partie en matériau composite à base d'une résine géopolymérique renforcée par des fibres, au moins la partie entourant un orifice prévu pour le passage d'un système de dégivrage étant en matériau composite à base d'une résine géopolymérique renforcée par des fibres et au moins une autre partie étant métallique pour pouvoir se déformer et absorber l'énergie en cas d'un choc. Comme illustré sur la figure 5, le cadre arrière comprend deux parties concentriques, une première partie annulaire 56 en matériau composite à base d'une résine géopolymérique en contact avec la peau extérieure 34 et une seconde partie annulaire 58 métallique en contact avec la peau intérieure 32, les deux parties 56 et 58 étant reliées par tous moyens appropriés, notamment des bords recourbés 60 prévus au niveau de chacune des parties, solidarisés. Cette solution est privilégiée lorsque la nacelle comprend une soufflante de grand diamètre et que l'énergie d'une pale lors d'une rupture est importante. La partie métallique 58 du cadre arrière pourra en se déformant absorber une partie de cette énergie.

Bien entendu, l'invention n'est évidemment pas limitée au mode de réalisation représenté et décrit ci-dessus, mais en couvre au contraire toutes les variantes.

## Revendications

1. Entrée d'air d'une nacelle d'aéronef comportant une peau extérieure (34), une peau intérieure (32) et un cadre arrière, **caractérisée en ce que** le cadre arrière comprend deux parties concentriques, une première partie annulaire (56) en matériau composite à base d'une résine géopolymérique renforcée par des fibres en contact avec la peau extérieure (34) et une seconde partie annulaire (58) métallique en contact avec la peau intérieure (32).

2. Entrée d'air d'une nacelle d'un aéronef selon la revendication 1, **caractérisée en ce que** la première partie annulaire (56) en matériau composite du cadre arrière comprend un orifice prévu pour le passage d'un système de dégivrage.

3. Entrée d'air d'une nacelle d'un aéronef selon la revendication 1 ou 2, **caractérisée en ce que** la première partie annulaire (56) en matériau composite du cadre arrière est réalisée à partir d'un matériau composite à base de fibres noyées dans une résine géopolymérique de type sialate (xSiO₂,AlO₂), dans lequel x est compris entre ou égale à 1,75 et 50.

4. Entrée d'air d'une nacelle d'un aéronef selon la revendication 3, **caractérisée en ce que** les fibres ont été au moins partiellement désensimées préalablement à l'imprégnation avec la résine géopolymérique.

## Claims

1. Air intake of a nacelle of an aircraft comprising an external skin (34), an internal skin (32) and a rear frame, **characterized in that** the rear frame comprises two concentric parts, a first annular part (56) made of composite material that is based on a fiber-reinforced geopolymer resin that is in contact with the external skin (34) of the nacelle and a second annular metal part (58) that is in contact with the internal skin (32) of the nacelle.

2. Air intake of a nacelle of an aircraft according to claim 1, wherein the first annular part (56) made of composite material of the rear frame comprises an orifice that is provided for the passage of a defrosting system.

3. Air intake of a nacelle of an aircraft according to claim 1 or 2, wherein the first annular part (56) made of composite material of the rear frame is made from a composite material that is based on fibers that are woven into a sialate-type geopolymer resin (xSiO₂, AlO₂), in which x is between or equal to 1.75 and 50.

4. Air intake of a nacelle of an aircraft according to claim 3, wherein the finish has been at least partially removed from the fibers prior to the impregnation with the geopolymer resin.

## Patentansprüche

1. Lufteinlass einer Gondel eines Flugzeugs, mit einer Außenhaut (34), einer Innenhaut (32) und einem hinteren Rahmen, **dadurch gekennzeichnet, dass** der hintere Rahmen zwei konzentrische Teile umfasst, ein erstes ringförmiges Teil (56) aus Verbundwerkstoff auf der Basis eines faserverstärkten Geopolymerharzes, das mit der Außenhaut (34) in Kontakt ist, sowie ein zweites ringförmiges Teil (58) aus Metall, das mit der Innenhaut (32) in Kontakt ist.

2. Lufteinlass einer Gondel eines Flugzeugs nach Anspruch 1, **dadurch gekennzeichnet, dass** das erste ringförmige Teil (56) aus Verbundwerkstoff des hinteren Rahmens eine für das Durchführen eines Enteisungssystems vorgesehene Öffnung aufweist.

3. Lufteinlass einer Gondel eines Flugzeugs nach Anspruch 1 oder 2, **dadurch gekennzeichnet, dass** das erste ringförmige Teil (56) aus Verbundwerkstoff des hinteren Rahmens aus einem Verbundwerkstoff auf der Basis von Fasern, die in ein Geopolymerharz vom Typ Sialat (xSiO₂, AlO₂), worin x zwischen oder gleich 1,75 und 50 liegt bzw. ist, eingebettet sind, hergestellt ist.

4. Lufteinlass einer Gondel eines Flugzeugs nach Anspruch 3, **dadurch gekennzeichnet, dass** die Fasern vor dem Imprägnieren mit dem Geopolymerharz wenigstens teilweise entschlichtet wurden.
